# EUROPÄISCHE PATENTSCHRIFT

(11) **EP 1 515 875 B1**
(45) Veröffentlichungstag und Bekanntmachung des Hinweises auf die Patenterteilung: **31.05.2006**
(21) Anmeldenummer: 03711823.9
(22) Anmeldetag: 14.02.2003
(51) Int. Cl.: B60R 21/01

(54) **VERFAHREN UND VORRICHTUNG ZUR AUFPRALLERKENNUNG**
METHOD AND DEVICE FOR COLLISION RECOGNITION
PROCEDE ET DISPOSITIF DE RECONNAISSANCE D'IMPACT

(30) Priorität: 13.06.2002 DE 10226260
(43) Veröffentlichungstag der Anmeldung: 23.03.2005
(73) Patentinhaber: ROBERT BOSCH GMBH, 70442 Stuttgart (DE)
(72) Erfinder: RECKNAGEL, Rolf-Juergen, 07747 Jena (DE); KOCHER, Pascal, F-67530 Ottrott (FR)
(86) Internationale Anmeldenummer: PCT/DE2003/000451
(87) Internationale Veröffentlichungsnummer: WO 2003/106225

(56) Entgegenhaltungen:
- EP-A- 0 852 193
- WO-A-00/41918
- WO-A-02/16169
- WO-A-99/42341
- DE-A- 4 424 551

## Beschreibung

### Stand der Technik

Die Erfindung geht aus von einem Verfahren bzw. einer Vorrichtung zur Aufprallerkennung nach der Gattung der unabhängigen Patentansprüche. Die EP-A-0852193, als nächstliegender Stand der technik angesehen, zeigt ein Verfahren zur Aufprallerheunung, wobei ein Signal eines Sensors zur Aufprallerheunung verwendet wird, wobei das ungefilterte Signal mit einer vorgegebenen Schwelle verglishen wird und anhand des Vergleichs ein Aufprall erkannt wird.

### Vorteile der Erfindung

Das erfindungsgemäße Verfahren bzw. die erfindungsgemäße Vorrichtung zur Aufprallerkennung haben den Vorteil, dass besonders schnelle Auslösezeiten der Rückhaltesysteme ermöglicht werden. Dies ist insbesondere bei Seitenaufprallsensoren von großem Vorteil. Insbesondere wird hier durch die Verwendung des ungefilterten Sensorsignals eine schnelle Plausibilisierung des gefilterten Auslösesignals ermöglicht. Die Filterung für das Signal zur Ermittlung des Aufpralls ist notwendig, um sogenannte Aliasingprobleme bei der Abtastung zu vermeiden. Das tiefpassgefilterte Signal wird anschließend von einer elektronischen Einheit ausgewertet. Der Signalanstieg wird durch das Tiefpassfiltern um wertvolle Millisekunden verzögert, die bei der Auswertung des ungefilterten Signals nicht anfallen. Da das ungefilterte Signal lediglich zur Plausibiltät verwendet wird, kann hier auf die Filterung verzichtet werden. Es muss lediglich eine Schwelle überschritten werden. Das Sensorsignal kann von einem Beschleunigungssensor, einem Drucksensor, einem Temperatursensor oder anderen Verformungssensoren erzeugt werden.

Durch die in den abhängigen Ansprüchen aufgeführten Maßnahmen und Weiterbildungen sind vorteilhafte Verbesserungen der in den unabhängigen Patentansprüchen angegebenen Vorrichtung bzw. angegebenen Verfahrens zur Aufprallerkennung möglich.

Besonders vorteilhaft ist, dass das Überschreiten der Plausibilitätsschwelle eine Plausibilitätsflagge (flag) setzt. Dies ist dann ein Marker oder ein Signal das anzeigt, dass die Plausibilität für einen Aufprall erkannt wurde.

Weiterhin ist von Vorteil, dass die Plausibilitätsflagge an einen Prozessor übertragen wird, um dort ausgewertet zu werden. Die Plausibilitätsflagge kann vorteilhafter Weise für eine vorgegebene zeit gehalten werden, um die Zeitdauer des Flags künstlich zu verlängern, so dass vermieden wird, dass die Plausibilitätsflagge zur kurz gesetzt wird. Dafür kann vorteilhafter Weise ein Halteglied verwendet werden, das nach dem Schwellwertvergleicher für die Plausibilitätsschwelle angeordnet ist. Der Schwellwertvergleicher für die Plausibilitätsschwelle kann programmierbar ausgeführt werden, um die Plausibilitätsschwelle entsprechend anzupassen. Der Schwellwertentscheider kann dahingehend erweitert werden, dass die Schwelle für eine vorgegebene Zeit überschritten werden muss, um die Plausibilitätsflagge zu setzen. Dies vermeidet dass kurze Spitzen zur Plausibilisierung führen.

Weiterhin ist es von Vorteil, dass das Gehäuse des Sensors mit einem Steuergerät verbindbar ist, beispielsweise über eine Zweidrahtleitung oder einen Bus, wobei das Steuergerät einen Prozessor aufweist, der die Signale des Sensors auswertet, sowohl das tiefpassgefilterte Signal, als auch die Plausibilitätsflagge. Das Steuergerät selbst ist dabei mit Rückhaltemitteln verbindbar, um bei einem Aufprall die geeigneten Rückhaltemittel wie Airbags oder Gurtstraffer einzusetzen. Der Filter und der Schwellwertvergleicher können im Gehäuse des Sensors angeordnet sein. Der Sensor weist vorteilhafter Weise zur Übertragung von digitalen Signalen einen Analog-Digital-Wandler auf, der das Plausibilitätssignal und die gefilterten Sensorsignale digitalisiert. Dies ermöglicht eine möglichst sichere Übertragung der Daten zum Steuergerät.

Alternativ ist es möglich, dass neben dem Sensor der Filterung der Plausibilisierung auch der Prozessor in einem Gehäuse angeordnet ist, so dass eine vollständige Steuereinheit vorliegt.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Vorrichtung und
- Figur 2: ein Flussdiagramm des erfindungsgemäßen Verfahrens.

### Beschreibung

Ein Seitenaufprall wird zur Zeit mit Hilfe von Beschleunigungssensoren in der Nähe des Crashgeschehens der B-Säule des Sitzquerträgers oder des Türschwellers bzw. mit Hilfe von Drucksensoren in der Tür sensiert. Die Auslöseentscheidung muss zusätzlich noch von einem weiteren Sensor, dem Plausibilitätssensor, bestätigt werden, um Rückhaltesysteme auszulösen. Typischerweise werden Beschleunigungssensoren als Plausibilitätssensoren verwendet. Diese Sensoren können beispielsweise im zentralen Airbag-Auslösegerät auf dem Tunnel montiert eingebaut werden. Die zur Seitencrash-Sensierung verwendeten ausgelagerten Beschleunigungssensoren können ebenfalls als Plausibilitätssensoren herangezogen werden.

Problematisch dabei ist, dass diese Plausibilitätssensorkonzepte zu langsam sind. Die Auslöseentscheidung wird durch das Warten auf die Bestätigung des Plausibilitätssensors um wertvolle Millisekunden verzögert. Mit einem schnellen Plausibilitätssensor kann man die volle Performance von Seitencrashsensoren oder anderen Aufprallsensoren ausnutzen. Dies ist der Fall bei indirekten Verformungssensoren, wie es Druck- oder Temperatursensoren sind, die sehr schnell einen Seitenaufprall detektieren können.

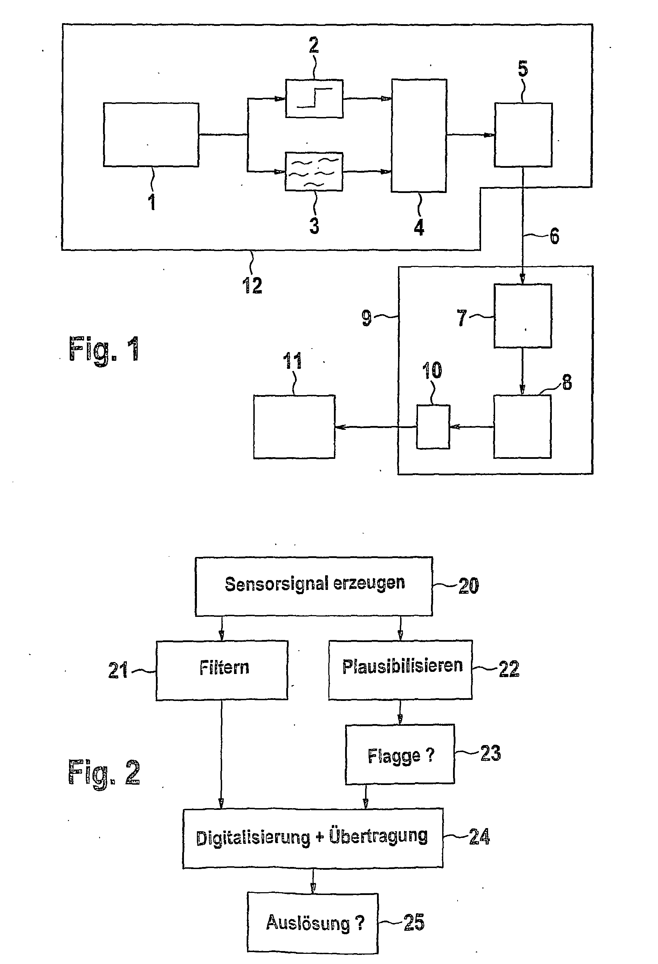

Figur 1 zeigt als Blockschaltbild die erfindungsgemäße Vorrichtung. In einem Gehäuse 12 eines Sensors 1 ist der Sensor 1 über seinen Ausgang einerseits mit einem Tiefpassfilter 3 und einem Schwellwertentscheider 2 verbunden. Der Filter 3 ist an einen ersten Eingang eines Analog-Digital-Wandlers 4 angeschlossen und der Schwellwertentscheider 2 an den zweiten Eingang des Analog-Digital-Wandlers 4. Der Analog-Digital-Wandler 4 ist über seinen Ausgang mit einem Senderbaustein 5 verbunden, der wiederum an eine Zweidrahtleitung 6 angeschlossen ist, über die Signale zu einem Empfängerbaustein 7 in einem Steuergerät 9 übertragen werden. Die Daten vom Empfängerbaustein 7 werden zu einem Prozessor 8 übertragen, der diese Daten verarbeitet. Der Prozessor 8 ist mit einem Senderbaustein 10 verbunden, der wiederum über eine Zweidrahtleitung mit Rückhaltemitteln 11 verbunden ist.

Als Sensor 1 kann, wie oben dargestellt, ein Beschleunigungssensor, ein Drucksensor, ein Temperatursensor oder ändere Verformungssensoren verwendet werden. Das Ausgangssignal des Sensors 1 wird ungefiltert zu einem Tiefpassfilter 3 übertragen und zu einem Schwellwertentscheider 2. Der Schwellwertentscheider 2 vergleicht das ungefilterte Signal mit einer vorgegebenen Schwelle, die am Schwellwertentscheider 2 eingebbar ist. Es ist möglich, dass diese Schwelle adaptiv nachgeführt wird in Abhängigkeit von dem Rohdatensignal. Überschreitet das ungefilterte Signal die im Schwellwertentscheider 2 vorgegebene Schwelle, dann setzt der Schwellwertentscheider 2 eine Plausibilisierungsflagge, die an den Analog-Digital-Wandler 4 übertragen wird. Der Analog-Digital-Wandler 4 weist einen Multiplexer auf, der die digitalisierten Signale, die der Analog-Digital-Wandler 4 aus den gefilterten Signalen vom Tiefpassfilter 3 erzeugt und die Plausibilisierungsflagge zu einem Datenstrom, der zu einem Senderbaustein 5 übertragen wird, der diesen Datenstrom über die Zweidrahtleitung 6 zum Empfängerbaustein 7 im Steuergerät 9 überträgt. Als Übertragungsprinzip wird wird hier eine Stromschnittstelle verwendet. Es sind jedoch auch Stromweitenmodulationen oder Spannungsimpulse oder Funk- oder Lichtübertragungen möglich. Auch eine Bus-Verbindung ist zwischen dem Steuergerät 9 und dem Sensorgehäuse 12 möglich. Dann wäre der Senderbaustein 5 als Bus-Controller ausgebildet, ebenso der Empfängerbaustein 7.

Bei der hier dargestellten Zweidrahtleitung 6 wird vom Steuergerät 9 ein Gleichstrom zum Senderbaustein 5 übertragen, auf dem die Signale, die vom Sensor 12 zum Steuergerät 9 übertragen werden sollen, moduliert werden. Es herrscht damit eine Art Powerline-Übertragung vor. Der Empfängerbaustein 7 überträgt dann den empfangenen Datenstrom zum Prozessor 8. Der Prozessor 8 wertet sowohl die Plausibilisierungsflagge aus, als auch die gefilterten Daten vom Sensor 1. Anhand der Plausibilisierungsflagge erkennt der Prozessor 8, ob vermutlich ein Aufprall vorliegt, oder nicht. Gegebenenfalls kann noch eine weitere Plausibilisierung im Steuergerät 9 vorgesehen sein. Die Plausibilisierungsflagge und die digitalisierten gefilterten Signale sind in einem vorgegebenen Rahmenformat zur Übertragung vorgesehen.

Um die Plausibilisierungsflagge länger zu halten, weist der Schwellwertentscheider 2 ein Halteglied auf, um die Haltezeit der Plausibilisierungsflagge zu verlängern.

Alternativ ist es möglich, dass die Filterung, Digitalisierung und Verarbeitung im Steuergerät 9 vorgenommen wird, sofern im Steuergerät ebenfalls wenigstens ein Sensor vorhanden ist. Es ist jedoch auch möglich, dass alle Elemente im Gehäuse 12 untergebracht sind, so dass damit eine vollständige Steuereinheit vorliegt. In diesem Fall wäre das Gehäuse 12 lediglich mit den Rückhaltemitteln 11 verbunden.

Figur 2 zeigt als Flussdiagramm das erfindungsgemäße Verfahren. Im Verfahrensschritt 20 wird das Sensorsignal durch den Sensor 1 erzeugt. Dieses Sensorsignal wird einerseits im Verfahrensschritt 21 gefiltert und andererseits mit dem Schwellwertentscheider 2 auf Plausibilität hin im Verfahrensschritt 22 überprüft. Ist die Schwelle überschritten, dann wird in Verfahrensschritt 23 die Flagge für die Plausibilisierung gesetzt. Im Verfahrensschritt 24 erfolgt dann die Digitalisierung der gefilterten Signale und deren Übertragung sowie Zusammenfassung mit der Plausibilisierungsflagge über die Leitung 6 zum Steuergerät 9. Anhand der gefilterten Signale und der Plausibilisierungsflagge von mehreren Sensoren erkennt der Prozessor 8 in Verfahrensschritt 25, ob eine Auslösung der Rückhaltemittel 11 erfolgen soll.

Das Plausibilisierungssignal, also die Plausibilisierungsflagge und die digitalisierten Daten können auch gleichzeitig übertragen werden, beispielsweise in einem Raummultiplex, in einem Frequenzmultiplex oder, wie oben dargestellt, in einem Zeitmultiplex.

## Patentansprüche

1. Verfahren zur Aufprallerkennung, wobei ein Signal eines Sensors (1) zur Aufprallerkennung verwendet wird, wobei das Signal gefiltert wird, wobei das ungefilterte Signal mit einer vorgegebenen Plausibilitätsschwelle verglichen wird und anhand des Vergleichs und des gefilterten Signals ein Aufprall erkannt wird.

2. Verfahren nach Anspruch 1, **dadurch gekennzeichnet, dass** beim Überschreiten der Plausibilitätsschwelle eine Plausibilitätsflagge gesetzt wird.

3. Verfahren nach Anspruch 2, **dadurch gekennzeichnet, dass** die Plausibilitätsflagge an einen Prozessor (8) übertragen wird.

4. Verfahren nach Anspruch 2 oder 3, **dadurch gekennzeichnet, dass** die Plausibilitätsflagge für eine vorgegebene Zeit gehalten wird.

5. Vorrichtung zur Aufprallerkennung, wobei die Vorrichtung einen Sensor zur Abgabe eines Signals aufweist, wobei ein Filter (3) zur Filterung des Signals vorgesehen ist, wobei ein Schwellwertentscheider (2) für das ungefilterte Signal vorgesehen ist und wobei ein Prozessor (8) derart ausgebildet ist, dass er in Abhängigkeit von einem Ausgangssignal des Schwellwertentscheiders (2) und des gefilterten Signals einen Aufprall erkennt.

6. Vorrichtung nach Anspruch 5, **dadurch gekennzeichnet, dass** der Schwellwertentscheider (2) an seinem Ausgang mit einem Halteglied derart verbunden ist, dass das Halteglied das Ausgangssignal für eine vorgegebene Zeit hält.

7. Vorrichtung nach Anspruch 5 oder 6, **dadurch gekennzeichnet, dass** der Sensor (1) mit einem Steuergerät (9) verbindbar ist, wobei das Steuergerät (9) den Prozessor (8) aufweist und mit Rückhaltemitteln (11) verbindbar ist.

8. Vorrichtung nach Anspruch 7, **dadurch gekennzeichnet, dass** der Filter (3) und das Halteglied im Steuergerät (9) angeordnet sind.

9. Vorrichtung nach Anspruch 7, **dadurch gekennzeichnet, dass** der Filter (3) das Halteglied und eine Einrichtung zur Analog-Digital-Wandlung in einem Gehäuse (12) mit dem Sensor (1) angeordnet sind.

10. Vorrichtung nach einem der Ansprüche 5 bis 9, **dadurch gekennzeichnet, dass** der Sensor (1) als Beschleunigungssensor ausgebildet ist.

## Claims

1. Method for detecting impacts, a signal of a sensor (1) being used for impact detection, the signal being filtered, the unfiltered signal being compared with a predefined plausibility threshold and an impact being detected by means of the comparison and the filtered signal.

2. Method according to Claim 1, **characterized in that** a plausibility flag is set when the plausibility threshold is exceeded.

3. Method according to Claim 2, **characterized in that** the plausibility flag is transmitted to a processor (8) .

4. Method according to Claim 2 or 3, **characterized in that** the plausibility flag is retained for a predefined time.

5. Device for detecting impacts, the device having a sensor for emitting a signal, a filter (3) for filtering the signal being provided, a threshold value decision element (2) for the unfiltered signal being provided and a processor (8) being embodied in such a way that it detects an impact as a function of an output signal of the threshold value decision element (2) and of the filtered signal.

6. Device according to Claim 5, **characterized in that** the threshold value decision element (2) is connected at its output to a sample and hold element in such a way that the sample and hold element holds the output signal for a predefined time.

7. Device according to Claim 5 or 6, **characterized in that** the sensor (1) can be connected to a control unit (9), in which case the control unit (9) has the processor (8) and can be connected to retaining means (11).

8. Device according to Claim 7, **characterized in that** the filter (3) and the sample and hold element are arranged in the control unit (9).

9. Device according to Claim 7, **characterized in that** the filter (3), the sample and hold element and a device for analogue-digital conversion are arranged in a housing (12) with the sensor (1).

10. Device according to one of Claims 5 to 9, **characterized in that** the sensor (1) is embodied as an acceleration sensor.

## Revendications

1. Procédé de reconnaissance d'impact selon lequel on utilise un signal d'un capteur (1), le signal étant filtré, et le signal non filtré étant comparé à un seuil de vraisemblance prédéfini et l'impact étant identifié à l'aide de la comparaison et du signal filtré.

2. Procédé selon la revendication 1,
**caractérisé en ce qu'**
un drapeau de vraisemblance est activé lors du dépassement du seuil de vraisemblance.

3. Procédé selon la revendication 2,
**caractérisé en ce que**
le drapeau de vraisemblance est transmis à un processeur (8).

4. Procédé selon la revendication 2 ou 3,
**caractérisé en ce que**
le drapeau de vraisemblance est maintenu pendant un temps prédéfini.

5. Dispositif de reconnaissance d'impact présentant un capteur pour émettre un signal filtré par un filtre (3), un discriminateur de valeur seuil (2) étant prévu pour le signal non filtré et un processeur (8) étant conçu pour identifier un impact en fonction d'un signal de sortie du discriminateur de valeur seuil (2) et du signal filtré.

6. Dispositif selon la revendication 5,
**caractérisé en ce que**
le discriminateur de valeur seuil (2) est relié à sa sortie à un élément qui maintient le signal de sortie pendant un temps prédéfini.

7. Dispositif selon la revendication 5 ou 6,
**caractérisé en ce que**
le capteur (1) est relié à un dispositif de commande (9) comportant le processeur (8) et relié à des moyens de retenue (11).

8. Dispositif selon la revendication 7,
**caractérisé en ce que**
le filtre (3) et l'élément de maintien sont logés dans le dispositif de commande (9).

9. Dispositif selon la revendication 7,
**caractérisé en ce que**
le filtre (3), l'élément de maintien et un dispositif de conversion analogique/numérique sont logés dans un boîtier (12) avec le capteur (1).

10. Dispositif selon une des revendications 5 à 9,
**caractérisé en ce que**
le capteur (1) est un capteur d'accélération.
